# EUROPÄISCHE PATENTSCHRIFT

(11) **EP 3 131 407 B1**
(45) Veröffentlichungstag und Bekanntmachung des Hinweises auf die Patenterteilung: **28.08.2019**
(21) Anmeldenummer: 15721566.6
(22) Anmeldetag: 10.04.2015
(51) Int. Cl.: A23J 1/14, A23J 3/16

(54) **VERFAHREN ZUR GEWINNUNG VON NAPIN UND CRUCIFERIN ODER EINEM GEMISCH DAVON AUS RAPS**
METHOD FOR OBTAINING NAPIN AND CRUCIFERIN OR A MIXTURE THEREOF FROM RAPESEED
PROCÉDÉ D'OBTENTION DE NAPINE ET DE CRUCIFÉRINE OU D'UN MÉLANGE DE CES SUBSTANCES À PARTIR DE COLZA

(30) Priorität: 12.04.2014 DE 102014005466
(43) Veröffentlichungstag der Anmeldung: 22.02.2017
(73) Patentinhaber: Düring, Klaus, 50226 Frechen (DE); Pilot Pflanzenöltechnologie Magdeburg E.V. (PPM E.V.), 38114 Magdeburg (DE)
(72) Erfinder: DÜRING, Klaus, 50226 Frechen (DE); TRESSEL, Ralf-Peter, 04916 Herzberg (DE); SCHULZE, Barbara, 39114 Magdeburg (DE); PUDEL, Frank, 39108 Magdeburg (DE)
(74) Vertreter: Schüssler, Andrea
(86) Internationale Anmeldenummer: PCT/EP2015/000759
(87) Internationale Veröffentlichungsnummer: WO 2015/154884

(56) Entgegenhaltungen:
- WO-A1-02/05922
- US-A1- 2009 036 655
- US-A1- 2010 136 173
- US-A1- 2010 249 378
- US-A1- 2012 252 065
- BEROT S ET AL: "Large scale purification of rapeseed proteins (Brassica napus L.)", JOURNAL OF CHROMATOGRAPHY B: BIOMEDICAL SCIENCES & APPLICATIONS, ELSEVIER, AMSTERDAM, NL, Bd. 818, Nr. 1, 15. April 2005 (2005-04-15), Seiten 35-42, XP004755753, ISSN: 1570-0232, DOI: 10.1016/J.JCHROMB.2004.08.001

## Beschreibung

Die vorliegende Erfindung betrifft ein Verfahren zur Gewinnung eines definierten Gemischs der Rapsproteine Napin und Cruciferin bzw. der Einzelproteine aus Rapsschrot in reiner Form, wobei nach Gewinnung eines Rohextrakts mittels eines geeigneten Extraktionsmittels die gewünschten Proteine über verschiedene Reinigungsschritte bei definierten pH-Werten aus dem Rohextrakt aufgereinigt werden.

In Pflanzen kommen als Speicherproteine vor allem Globuline vor, sehr selten aber Albumine. Raps ist die wichtigste Pflanze, in deren Samen größere Mengen Albumin vorkommt. Das Raps-Albumin heißt Napin. Das Raps-Globulin heißt Cruciferin. Nativ sind im Rapssamen ca. 60% Cruciferin und ca. 20% Napin vorhanden.

Kommerziell werden Albumine in vielen Anwendungsgebieten benötigt. Wegen des seltenen Vorkommens von Albuminen in Pflanzen und des Fehlens eines industriellen Reinigungsverfahrens für Napin steht aber bisher kein pflanzliches Albumin für die industrielle Anwendung zur Verfügung.

Rapsproteine sind ein bisher kaum genutztes Reservoir nachwachsender Rohstoffe. In besonders großen Mengen fallen diese z. B. bei der Ölproduktion aus Raps bzw. auch bei anderen landwirtschaftlichen Prozessen an. Zumeist werden sie als Abfallprodukt in die Tierfütterung gegeben, da keine reinen und damit technisch verwertbaren Komponenten mit technisch und wirtschaftlich einsetzbaren Methoden daraus zu gewinnen sind. Die beiden vorherrschenden Speicherproteine in Raps, Napin und Cruciferin, die technisch bisher nur als Rohproteinfraktion gewonnen werden konnten, eignen sich z. B. aufgrund ihrer physikochemischen Eigenschaften als isolierte Komponenten für Verwendungen als Schäume oder Klebstoffe (Napin) oder für die Folienherstellung (Cruciferin). Weiterhin sind sie aufgrund dieser Eigenschaften ebenfalls für die Verwendung in der Lebensmittelindustrie geeignet, z. B. als Schäumer und Stabilisatoren.

Bisher wurden hauptsächlich Fällungs- und Extraktionsverfahren eingesetzt, um Rohproteinfraktionen oder angereicherte Verbindungen in technischem Maßstab gewinnen zu können. In diesem Zusammenhang wird auf die US-Patente Nr. 4,370,267 und 4,368,151 verwiesen, in denen die Anreicherung einer pflanzlichen Speicherproteinkomponente nach isoelektrischer Fällung durch Extraktion unter geeigneten Bedingungen beschrieben wird. Ein weiteres Verfahren zur Proteinextraktion aus Rapssamenpflanzen ist in der WO 2008/144939 A1 beschrieben. Alle diese Verfahren des Standes der Technik zeichnen sich durch eine geringe Effizienz aus. Außerdem sind auf diesen Wegen keine Reinkomponenten, sondern lediglich angereicherte Fraktionen erhältlich und zumeist können solche Verfahren nur auf die Gewinnung einer einzigen Komponente aus einem Proteingemisch hin optimiert werden. Reinere Substanzen konnten bisher lediglich in komplizierten, mit einer Kombination von unterschiedlichen Reinigungsschritten beinhaltenden Prozessen im Labormaßstab gewonnen werden, z. B. 12S Globuline aus Raps durch eine Kombination aus Fällung, Dialyse, Gelchromatographie und Anionenaustausch-Chromatographie. Desweiteren sind Verfahren bekannt, die Proteinisolate ergeben, deren Zusammensetzung variiert, weil die Prozessbedingungen keine definierten Produkte ermöglichen (WO 2002/089597 A1, WO 2003/043438, WO 2010/020039 A1, WO 2011/032266 A1, WO 2011/057407 A1, WO 2013/000066 A1). Hier werden weder Reinkomponenten(Napin/Cruciferin) noch reine Mischproteine erhalten, sondern Isolate, die noch einen hohen Anteil an anderen Stoffen enthalten.

Desweiteren wird in der WO 2002/05922 die Extraktion von Napin und Cruciferin aus Rapssamen beschrieben, wobei aus einem wässrigen Extrakt durch "Expanded Bed"-Kationenaustausch-Chromatographie Napin und aus dem dabei erhaltenen Durchlauf über "Expanded Bed"-Anionenaustausch-Chromatographie Cruciferin erhalten wurde. Allerdings können durch das dort beschriebene Verfahren keine Proteine mit einigermaßen zufriedenstellender Reinheit aus industriell verfügbarem Ausgangsmaterial erhalten werden. Ein ähnliches Verfahren ist in der WO 2009/018660 A1 beschrieben. Hier wird ein Verfahren vorgestellt, das ein im Wesentlichen reines 2S Rapsprotein aus Rapssaatmehl herstellen soll. Die Solubilisierung des Rapsproteins aus dem öligen Rapssaatmehl erfolgt unter Verwendung einer wässrigen Salzlösung mit einer Salzkonzentration von ungefähr 0,25 bis 0,35 M bei einem pH von ungefähr 5 bis 6. Die Aufreinigung des 2S Rapsproteins erfolgt über eine Kationenaustauschersäule und die Ablösung des Proteins von der Säule unter Verwendung einer Salzlösung mit einem Salzgehalt von 0,55 bis 0,7 M. Dies ist eine sehr hohe Salzkonzentration und es steht zu erwarten, dass das Produkt vor dem Einsatz entsalzt werden muss.

Ein weiteres chromatografisches Reinigungsverfahren für ein Raps-Mischprotein wurde von Hansen et. al. auf einem Poster bei der Tagung "Pflanzliche Proteine" am 15./16. April 2013 in Nuthetal (Deutschland) vorgestellt. Die Reaktionsbedingungen sind in der Publikation von Kristjansson et al. (Annual Transactions of the Nordic Rheology Society, Vol. 21, S. 317-320, 2013) beschrieben. Es werden nach Auftrag auf zwei Säulen zwei Fraktionen erhalten, wobei eine ein Protein mit geringerem Molekulargewicht (Napin) enthält und die andere ein Gemisch verschiedener löslicher Rapssaatproteine.

Somit liegt der Erfindung im wesentlichen das technische Problem zugrunde, ein Reinigungsverfahren für die Rapsproteine Napin und Cruciferin bzw. eines Gemisches aus Rapspflanzen zur Verfügung zu stellen, das die Nachteile der im Stand der Technik beschriebenen Verfahren nicht aufweist, d. h. industriell skalierbar ist, reines Napin bzw. Cruciferin mit einem Reinheitsgrad von mindestens 95% bzw. mindestens 50% für das Gemisch liefert und mit kommerziell/industriell verfügbaren Rapsprodukten wie z.B. Rapsmehl oder Rapsschrot als Ausgangsmaterial für die Reinigung kompatibel ist.

Die Lösung dieses technischen Problems wurde durch die Bereitstellung der in den Patentansprüchen gekennzeichneten Ausführungsformen erreicht.

Überraschenderweise wurde gefunden, dass mittels der erfindungsgemäßen Verfahren vor allem durch die Einhaltung bestimmter pH-Werte und Salzkonzentrationen bei den einzelnen Reinigungsschritten die gewünschten Rapsproteine mit hoher Effizienz in Reinstoffe aufgetrennt bzw. als Reinstoffe isoliert werden können. Bei den erfindungsgemäßen Verfahren kann im ersten Schritt lediglich durch Ausfällung hochreines Cruciferin (Reinheit über 95%) und aus dem Überstand über Kationenaustausch-Chromatographie hochreines Napin (Reinheit ebenfalls über 95%) erhalten werden. Das erfindungsgemäße Verfahren liefert auch ein reines Raps-Mischprotein mit ca. 55-60%, bevorzugt ca. 57% Napin und ca. 40-45%, bevorzugt ca. 43% Cruciferin.

Somit betrifft die vorliegende Erfindung ein Verfahren zur Gewinnung eines Gemischs der Rapsproteine Napin und Cruciferin aus einer Pflanze, wobei das Verfahren folgende Schritte umfasst:
(a) Aufschluss der Pflanze zur Gewinnung eines Rohextrakts mittels wässriger Extraktion;
(b) Gewinnung der gewünschten Proteine aus dem Überstand von Schritt (a) und Einstellung des Überstands auf einen pH-Wert im Bereich von 5,0 bis 6,0;
(c) Auftrennung des Gemischs aus Schritt (b) über einen Kationen-Austauscher mit einem Hochsalz-Elutionspuffer wobei der pH-Wert des Puffers im Bereich von 5,0 bis 6,0 liegt; und
(d) Gewinnung des Eluats.

Die vorliegende Erfindung betrifft auch ein Verfahren zur Gewinnung der Rapsproteine Napin und Cruciferin aus einer Pflanze in reiner Form, wobei das Verfahren folgende Schritte umfasst:
(a) Aufschluss der Pflanze zur Gewinnung eines Rohextrakts mittels wässriger Extraktion, vorzugsweise bei pH 5,0-6,0;
(b) Gewinnung der gewünschten Proteine aus dem Überstand von Schritt (a) und Einstellung des Überstands auf einen pH-Wert im Bereich von 3,5 bis 4,5;
(c) Zentrifugation und Gewinnung des Cruciferin enthaltenden Pellets;
(d) Einstellung des Überstands von Schritt (c) auf einen pH-Wert im Bereich von 7,0 bis 8,0;
(e) Auftrennung des Gemischs aus Schritt (d) über einen Kationen-Austauscher mit einem Hochsalz-Elutionspuffer mit einem pH-Wert im Bereich von 7,0 bis 8,0; und
(f) Gewinnung des Napin enthaltenden Eluats.

Vorzugsweise umfasst das erfindungsgemässe Verfahren keine weiteren Schritte, d. h. es sind keine Vorbehandlungs- und/oder weitere Reinigungsschritte, insbesondere solche, die auf spezifischen physikochemischen Charakteristika des gewünschen Proteins, z. B. Molekulargewicht, Sedimentationskoeffizient, pI-Wert, basieren, notwendig.

Vorbehandlungs- und/oder Reinigungsschritte können jedoch gegebenenfalls angefügt werden.

Durch die Ausfällung des Cruciferins aus dem Extraktionsüberstand von Schritt (a) wird die Effizienz der der Kationenaustausch-Chromatographie deutlich gesteigert gegenüber Verfahren, in denen das Proteingemisch auf das Kationenaustausch-Chromatographie-Material aufgegeben wird.

Der hier verwendete Ausdruck "in reiner Form" bedeutet, dass das Protein im Wesentlichen frei von Verunreinigungen ist, vorzugsweise eine Reinheit von mindestens 95%, mehr bevorzugt von mindestens 98% und noch mehr bevorzugt von mindestens 99% aufweist.

Für die Gewinnung des Proteins kann jedes Pflanzenteil bzw. Gewebe der Pflanze verwendet werden, wobei die Auswahl entsprechend der unterschiedlichen Konzentration des gewünschten Proteins in den einzelnen Pflanzenteilen bzw. Geweben erfolgt. Vorzugsweise wird das gewünschte Protein aus Samen gewonnen.

Geeignete Verfahren zum Aufschluss der Rapspflanze sind dem Fachmann bekannt und dieser kann entsprechend des verwendeten Pflanzenmaterials geeignete Aufschlussverfahren auswählen. Diese können z. B. eine Homogenisierung, wie in einem Mahlwerk oder Mixer zur Gewinnung eines Pflanzenschrots und/oder eine Lyse mit geeigneten Lysemitteln umfassen.

Der Fachmann kennt auch geeignete Extraktionsmittel und wählt diese u. a. entsprechend den bekannten Eigenschaften der gewünschten Proteine aus. Vorzugsweise handelt es sich bei dem Extraktionsmittel um eine wässrige Lösung, insbesondere Phosphatpuffer, TRIS-Puffer, MOPS-Puffer, HEPPS-Puffer, Barbital-Acetat-Puffer, Essigsäure-Acetat-Puffer, PBS-Puffer, MES-Puffer oder ein ethanolisches Extraktionsmittel.

Vorzugsweise werden die Rapsproteine aus schonend gepresstem Rapsschrot gewonnen und zur Gewinnung des Rohextraktes wird der Rapsschrot auf eine möglichst kleine Partikelgröße, vorzugsweise im Bereich von 0,2 bis 0,5 mm, zerkleinert.

Die wässrige Extraktion wird vorzugsweise bei einer Temperatur im Bereich von 40 bis 60°C, vorzugsweise bei ca. 50°C durchgeführt. Die Dauer der Extraktion sollte so gewählt werden, dass die gewünschten Proteine möglichst vollständig extrahiert werden, die Extraktionsdauer kann beispielsweise ca. eine Stunde dauern. Vorzugsweise erfolgt nach der Extraktion eine Abtrennung noch möglicherweise vorhandener fester Bestandteile über Zentrifugation oder mittels eines Dekanters.

In dem erfindungsgemäßen Verfahren zur Gewinnung des Gemischs liegt der pH-Wert bei den Schritten (b) und (c) im Bereich von 5,0 bis 6,0, vorzugsweise 5,5 bis 6,0. Am meisten bevorzugt ist ein pH-Wert von ca. 5,7 bis 5,8. Nach Zentrifugation bzw. Dekantierung erfolgt die Einstellung des Überstands für die darauf folgende Ionenaustausch-Chromatographie auf den gewünschten pH-Wert vorzugsweise mit Natronlauge. Nach Äquilibrierung der Chromatographie-Säule auf den gleichen pH-Wert mit dem Ladungspuffer wird diese mit dem Überstand beladen und anschließend mit Ladungspuffer gewaschen. Bei Durchführung der Chromatographie mittels des EBA-Verfahrens wird in expandiertem Zustand vorzugsweise mit 15-18 Säulenvolumina Ladungspuffer gewaschen. Bei anderen Chromatographietypen wird mit einer entsprechend angepassten Anzahl Säulenvolumina gewaschen. Nach Elution des Rapsproteingemischs mit Elutionspuffer wird das Eluat entsalzen und vorzugsweise lyophilisiert.

In dem erfindungsgemäßen Verfahren zur Gewinnung der Einzelproteine liegt der pH-Wert bei Schritt (b) im Bereich von 3,5 bis 4,5, vorzugsweise 3,8 bis 4,2, wobei ein pH-Wert von ca. 3,9 bis 4,1 am meisten bevorzugt ist, und bei den Schritten (d) und (e) im Bereich von 7,0 bis 8,0, vorzugsweise 7,2 bis 7,8. Am meisten bevorzugt ist ein pH-Wert von ca. 7,4 bis 7,6.

Die Einstellung der pH-Werte erfolgt vorzugsweise mit Natronlauge. In dem erfindungsgemäßen Verfahren zur Gewinnung der beiden Einzelproteine in reiner Form wird nach Zentrifugation bzw. Dekantierung der Überstand der Extraktionslösung vorzugsweise auf 6 bis 10°C abgekühlt, die abgekühlte Lösung wird dann auf den gewünschten pH-Wert eingestellt, wobei dazu vorzugsweise Zitronensäure oder 1 M HCl-Lösung verwendet werden. Vorzugsweise wird danach über einen längeren Zeitraum, z.B. ca. 1 h bei 6-10°C gerührt und dann das ausgefällte Cruciferin mit >4.000g abzentrifugiert. Das Pellet enthält reines Cruciferin und eine weitere Reinigung kann, wenn erwünscht, z.B. durch mehrmaliges Waschen mit deionisiertem Wasser erreicht werden. Schließlich kann eine Lyophilisierung erfolgen. Die weiteren Reinigungsschritte für Napin über Ionenaustausch-Chromatographie entsprechen sinngemäß den vorstehend für die Gewinnung des Gemischs beschriebenen (mit geänderten pH-Werten).

In einer bevorzugten Ausführungsform der erfindungsgemäßen Verfahren ist der für die Chromatographie verwendete Ladungspuffer und/oder Elutionspuffer ein Phosphatpuffer. Dessen Molarität liegt vorzugsweise im Bereich von 5 mM bis 80 mM, wobei ein Bereich von 10 mM bis 40 mM mehr bevorzugt ist. Besonders bevorzugt ist ein Wert von ca. 20 mM.

Der hier verwendete Ausdruck "Hochsalz-Elutionspuffer" bezieht sich auf einen Elutionspuffer (z.B. einen Phosphatpuffer) mit einem Salzgehalt, der so hoch ist, dass die Bindung der zu eluierenden Proteine an das für die Chromatographie verwendete Trägermaterial aufgehoben wird. Vorzugsweise enthält der Elutionspuffer für diesen Zweck NaCl im Bereich von 0,2 bis 0,6 M. Mehr bevorzugt- ist ein Bereich von 0,3 bis 0,5 M. Am meisten bevorzugt ist ein Wert von ca. 0,4 M.

Erfindungsgemäss wird eine Kationenaustausch-Chromatographie durchgeführt, um die gewünschten Proteine zu reinigen. Ein anwendbares Chromatographieverfahren unter verschiedenen anderen ist die "Expanded Bed Adsorptions-Chromatographie" (EBA). Die EBA-Technologie ist in den grosstechnischen Massstab übertragbar und benötigt keine aufwendige Apparatetechnik. Die Adsorbentien zeigen kaum Anzeichen von "Fouling", so dass lange Standzeiten der Chromatographie-Säulen gewährleistet sind.

Ein bevorzugtes Trägermaterial für die Kationenaustausch-Chromatographie des erfindungsgemäßen Verfahrens ist Streamline SP XL™ (GE Healthcare). Weitere geeignete Trägermaterialien sind Amberlite-Adsorber (Dow Chemical), Antibodix-Adsorber (Sepax Technologies), Proteomix-Adsorber (Sepax Technologies), DEAE-Sepharose (z.B. Sigma Aldrich), SP-Sepharose (z.B. GE Healthcare), Whatman-Kationenadsorber (GE Healthcare), ZirChrom-PEZ-Adsorber (ZirChrom Separations).

Beispiele für Anwendungsmärkte der erfindungsgemäßen Proteine sind: Backwaren, Süßwaren, Milchprodukte, Feinkostprodukte, ölhaltige Emulsionen, Emulgatoren, Lacke, Dispersionen, Klebstoffe, Papier, funktionelle Schäumer, Tiernahrung (z.B. Aquakultur), Kosmetika, Polymere, Pharmazeutika, Nutraceuticals und Functional Food.

Durch die erreichte hohe Reinheit der Produkte sind diese recht geschmacksneutral und sind daher sehr geeignete Nahrungsmittelzusätze, ohne den Geschmack des eigentlichen Nahrungsmittels zu verfälschen oder negativ zu beeinflussen.

Erfindungsgemäß eignet sich das hergestellte Napin (ein basisches Protein) besonders zur Stabilisierung von Schäumen in Gegenwart von Öl und Zucker, wenn es in Kombination mit einem sauren Protein eingesetzt wird (öltolerantes Schäumungssystem). Ein saures Protein (z.B. Molkeprotein) in Kombination mit Napin könnte somit das teure Hühnerei-Lysozym ersetzen.

Desweiteren kommt insbesondere für das Napin ein Einsatz als veganes Feinkostprodukt, funktioneller Schäumer in Milchprodukten, als Analogkäse und pfanzliche Sahne in Frage.

Das Cruciferin eignet sich insbesondere für Anwendungen, bei denen eine starke Schaumstabilisierung in der Gegenwart von Öl erforderlich ist, u.a. auch bei technischen Anwendungen. Zusätzlich hervorzuheben sind seine guten filmbildenden, gelierenden und verdickenden Eigenschaften.

Für das Rapsmischprotein sind Anwendungen u.a. in der Lebensmittel-, Kosmetik- und technischen Industrie von großem Interesse, bei denen eine hohe bis sehr hohe Schaumkapazität und -stabilität, auch in Gegenwart von Ölen, verbunden mit einer guten Löslichkeit von großer Bedeutung ist.

### Kurze Beschreibung der Figuren

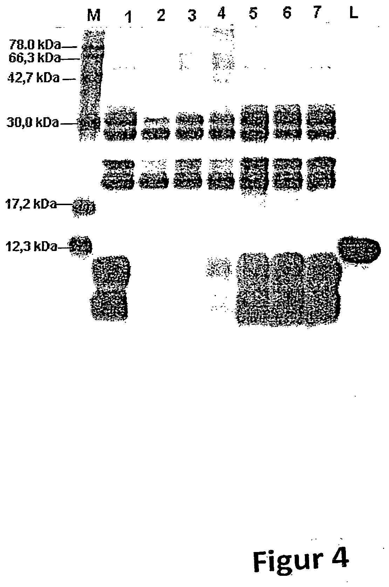

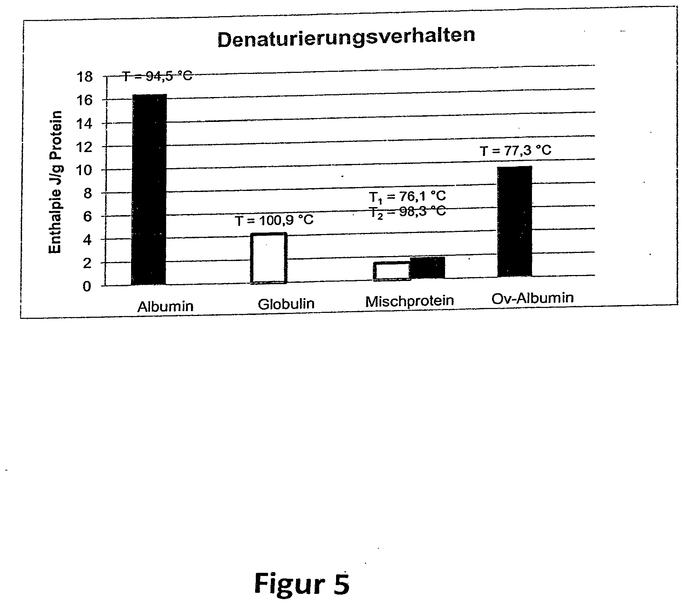

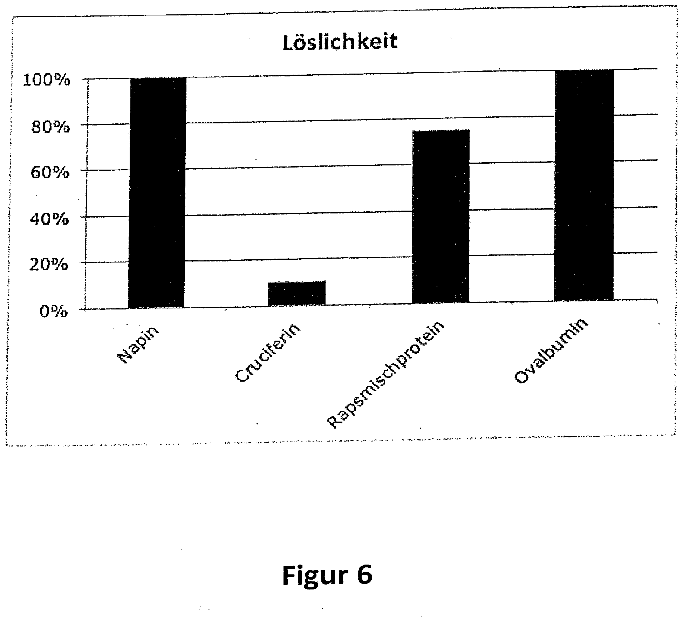

Figur 1: Ergebnisse der SDS-PAGE des nach WO 2002/05922 gereinigten Napins
M: Marker; N: Napin; C: Cruciferin
Typisches Ergebnis aus der Quantifizierung:
Napin: ca. 82%; Cruciferin: ca. 9%; andere Proteine: ca. 9%
Figur 2: Ergebnisse der SDS-PAGE des nach Beispiel 1 ausgefällten Cruciferins
M: Marker; Spuren 1-4: ausgefälltes Cruciferin; N: Hühnerei-Lysozym
Typisches Ergebnis aus der Quantifizierung:
Napin: <3%; Cruciferin: >95%; andere Proteine: <2%
Figur 3: Ergebnisse der SDS-PAGE des nach Beispiel 2 gereinigten Rapsproteingemischs
M: Marker; Spuren 1-3: chromatographisch gereinigtes Rapsproteingemisch; 4: chromatographisch gereinigtes Napin; L: Lysozym
Typisches Ergebnis aus der Quantifizierung für Rapsproteingemisch:
Napin: ca. 57%; Cruciferin: ca. 43%
Typisches Ergebnis aus der Quantifizierung für Napin:
Napin: >98%; Cruciferin: <2%
Figur 4: Ergebnisse der SDS-PAGE des nach Beispiel 2 gereinigten Rapsproteingemischs unter Anwendung unterschiedlicher pH-Werte bei Auflösung des Rückstands
M: Marker
Spur 1: Mischprotein bei pH 5,5
Spur 2: Rückstand nach Auflösen des Mischproteins bei pH 4,0
Spur 3: Rückstand nach Auflösen des Mischproteins bei pH 7,0
Spur 4: Rückstand nach Auflösen des Mischproteins bei pH 10,0
Spur 5: gelöstes Mischprotein bei pH 4,0
Spur 6: gelöstes Mischprotein bei pH 7,0
Spur 7: gelöstes Mischprotein bei pH 10,0
L: Lysozym
Figur 5: Untersuchung des Denaturierungsverhaltens (Wärme-Enthalpie/Methode DSC, modifiziert nach Sousa (SOUSA, I. et al.; Differential scanning calorimetry of lupin and soy protein; Zeitschrift für Lebensmittel-Untersuchung und Forschung; 201:566-589 (1995))
Albumin: chromatographisch gereinigtes Napin
Globulin: ausgefälltes Cruciferin
Mischprotein: chromatographisch gereinigtes Rapsmischprotein (die beiden Komponenten Napin und Cruciferin zeigen ein unterschiedliches Denaturierungsverhalten, daher sind zwei Messwerte angegeben).
Ov-Albumin: Hühnerei-Ovalbumin
Figur 6: Untersuchung der Proteinlöslichkeit nach Morr (1985) (MORR, C.V.; Collaborative study to develop a standardized food protein solubility procedure; Journal of Food Science; 50:1715-1718 (1985))

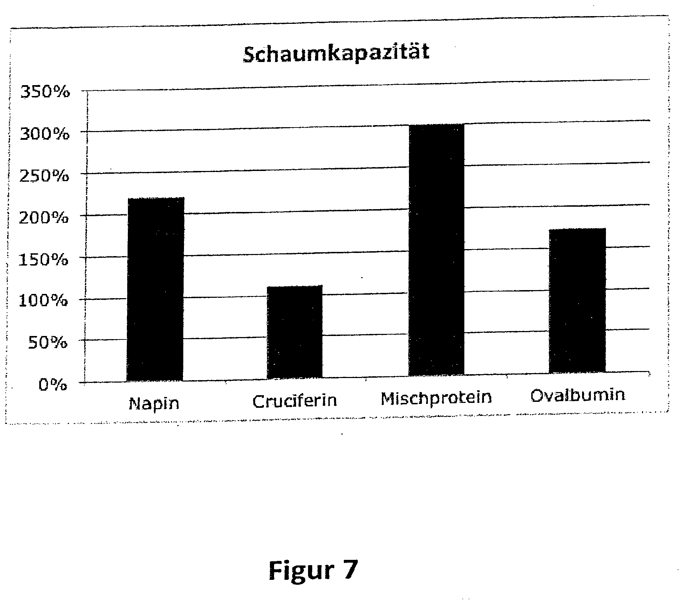

Figur 7: Untersuchung der Schaumkapazität nach Kroll (1984) (KROLL, J. et al.; Beeinflussung funktioneller Eigenschaften von Proteinen durch gekoppelte mechanolytische und chemische Modifizierung; Die Nahrung 28, Nr.4, 389-396 (1984))

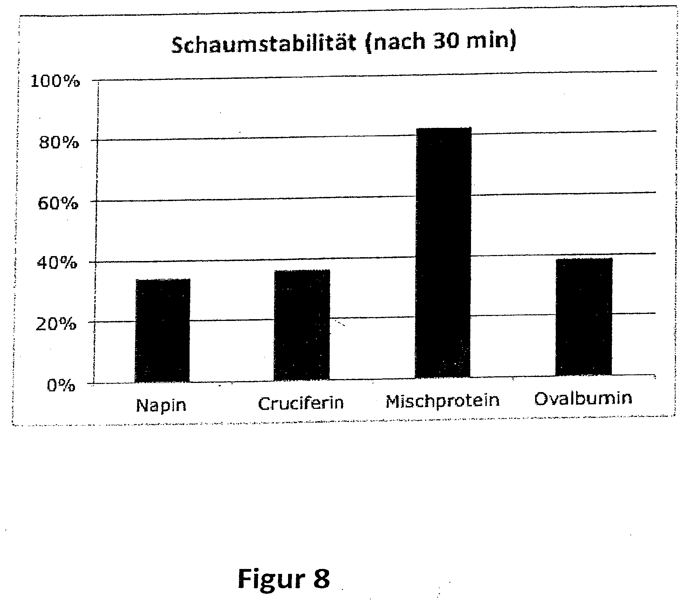

Figur 8: Untersuchung der Schaumstabilität nach Kroll (1984) (KROLL, J. et al.; Beeinflussung funktioneller Eigenschaften von Proteinen durch gekoppelte mechanolytische und chemische Modifizierung; Die Nahrung 28, Nr.4, 389-396 (1984))

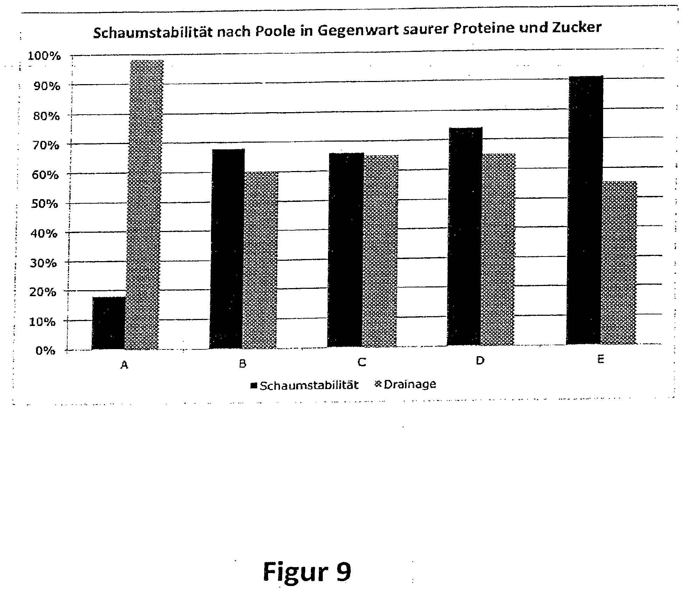

Figur 9: Untersuchung der Schaumstabilität nach Poole in Gegenwart von sauren Proteinen und Zucker
(POOLE, S., WEST, S. I. and WALTERS, C. L.M; Protein-protein interactions: Their importance in the foaming of heterogeneous protein systems. J. Sci. Food Agrlc., 35:701-711 (1984))
A: 0,3% Napin
B: 0,3% Napin + 1% BSA
C: 0,3% Napin + 1% BSA + 5% Öl
D: 0,3% Napin + 1% BSA + 5% Öl + 10% Sucrose
E: 0,3% Hühnerei-Lysozym + 1% BSA + 5% Öl + 10% Sucrose

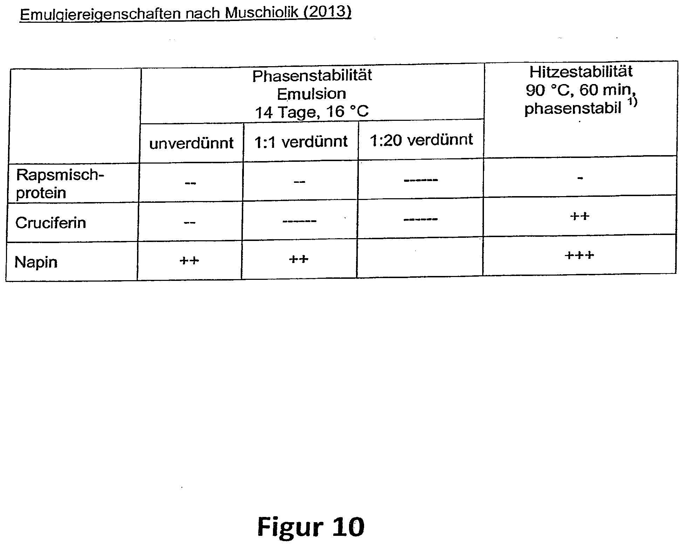

Figur 10: Untersuchung der Emulgiereigenschaften nach Muschiolik (2013)
(MUSCHIOLIK, Gerald; Untersuchungen zur Technofunktionalität von Proteinproben; Prüfbericht, 2013)

**Phasenstabilität:**

| | |
|---|---|
| +++ | völlig stabil |
| ++ | unten wenig Wasser |
| - | geringer Wasserabsatz |
| ----- | starker Wasserabsatz |

**Hitzestabilität:**

| | |
|---|---|
| +++ | stabil, keine Phasentrennung, kein starker Luftgehalt, kein Ölabsatz |

| | |
|---|---|
| ¹) Emulsionspartikel adsorbieren an Luftblasen. | |

Die folgenden Beispiele erläutern die Erfindung.

### Beispiel 1

### Aufreinigung von Napin und Cruciferin aus nicht-entöltem Rapssamen

### Rapssaatverarbeitung

Rapssamen wird zur Myrosinase-Inaktivierung durch Wärmekonditionierung in einem Schaufeltrockner Typ D 600 (DVA Deutsche Vakuumapparate Holland Merten GmbH) behandelt. Mittels eines Schaufelwerks wird die Saat mit einer Drehzahl von 10 min⁻¹ vermischt. Der Wärmeeintrag erfolgt über einen mit Wasserdampf beheizten Doppelmantel des Schaufeltrockners. Die Wärmebehandlung dauert 15 min und die Saatausgangstemperatur beträgt 75 bis 80°C. Die Rapssaat wird anschließend zur Ölgewinnung in einer Schneckenpresse Typ Komet (IBG Monforts Oekotec GmbH & Co.KG, Mönchengladbach) verarbeitet. Die Presstemperatur liegt zwischen 50 und 60°C. Mit dem Rapskuchen wird im nachfolgenden Schritt eine n-Hexan-Extraktion durchgeführt. Diese erfolgt mit einer Pilotanlage der Fa. Bio-Ingenieurtechnik GmbH (Leipzig) durch eine Fest-Flüssig-Extraktion mit einer Miscella-Destillation. Die Extraktion wird in zwei Stunden bei einer Temperatur von 58 bis 60°C in zwei Stufen durchgeführt. Nach der n-Hexanextraktlon beträgt der Restölgehalt 1 bis 2 Massenprozent. Die anschließende Desolventisierung des Rapsschrotes wird in einem Wirbelschichttrockner durchgeführt. Bei einer Desolventisierungsdauer von 15 min und einer Betriebstemperatur der Wirbelschicht von ca. 80°C wird das Hexan aus dem Rapsschrot ausgeschieden. Nach der Desolventisierung wird das Rapsschrot mit einer Riffelwalze Typ Haferboy (Egon Sommer Maschinenbau GmbH & Co. KG) in mehreren Schritten auf einen Bereich von 0,2 bis 0,5 mm zerkleinert.

### Proteinextraktion

Das Rapsschrot wird im Verhältnis 1:10 in wässriger Lösung bei 50°C eine Stunde gerührt. Der pH-Wert der Lösung liegt im Bereich von 5,4 bis 5,8. Anschließend wird die Lösung mit einer g-Zahl >4000 zentrifugiert.

### Cruciferingewinnung

Der Überstand aus der Proteinextraktion wird auf 6 bis 10°C abgekühlt. Nach der Einstellung mit Zitronensäure auf pH 4 wird die Lösung 30 min gerührt und anschließend mit einer g-Zahl >4000 zentrifugiert. Dieser Schritt kann mehrmals wiederholt werden. Der erhaltene Rückstand wird lyophilisiert.

### Napingewinnung

Der Überstand der Cruciferingewinnung mit einem Trockensubstanzgehalt von 3,3% wird mit Natronlauge auf pH 7,5 eingestellt. Für die Expanded-Bed-Adsorptions-Chromatographie (EBA) wird eine Streamline 25 Säule (GE Healthcare) verwendet, in welcher eine Menge des Kationenadsorbers Streamline SP XL (GE Healthcare) mit 160,5 ml eingefüllt ist. Mit einem Fluss von 15 ml/min wird der Adsorber durch Anströmen mit einem Bindungspuffer (20 mM Phosphatpuffer, pH 7,5) mit einer Puffermenge von 6 Säulenvolumen expandiert. Anschließend wird der Lösungsüberstand, z.B. 2000 ml, ebenfalls mit einem Fluss von 15 ml/min durch die Säule gepumpt. Im nachfolgenden Arbeitsschritt wird durch Bindepuffer der sich in der Säule befindliche restliche Überstand ebenfalls mit einer Flussrate von 15 ml/min aus der Säule bis zu einem End-UV von <180 mAU entfernt. Das erforderliche Volumen an Bindepuffer beträgt ca. 15 bis 18 Säulenvolumen. Danach erfolgt die Elution der adsorbierten Proteine. Als Elutionspuffer wird eine 20 mM Phosphat-Pufferlösung mit pH 7,5 und 0,4 M NaCl verwendet. Das Eluat wird anschließend durch Membranfiltration mit einer Wickelmembran (Millipore GmbH) auf PES-Basis und einem cut-off von 10 kDa bis zu einer Leitfähigkeit <500 pS/cm entsalzen und danach lyophilisiert. Die Regeneration der Bindungskapazität des Adsorbers erfolgt in vier Arbeitsschritten mit einer 0,5 M NaOH + 1 M NaCl-Lösung, mit DI-Wasser, 25 % Essigsäure und abschließend mit dem Bindungspuffer.

### Beispiel 2

### Gewinnung eines Gemischs aus Napin und Cruciferin aus nicht-entöltem Rapssamen

Die Extraktionslösung der Proteinextraktion nach Beispiel 1 wird nach der Separation ohne Präzipitation auf pH 5,5 eingestellt. Die Äquilibrierung des Adsorbers erfolgt mit Bindungspuffer bei pH 6,6. Die Extraktionslösung wird anschließend mit einer Flussrate von 15 ml/min durch die EBA-Säule gepumpt. Die folgenden Arbeitsschritte werden gleichartig wie bei der Napingewinnung ausgeführt. Für die Elution der Proteine wird der Elutionspuffer (0,4 M NaCl) auf pH 5,5 eingestellt. Die erhaltene Elutionslösung wird auf eine Leitfähigkeit bis <600 µS/cm filtriert und lyophilisiert.

### Beispiel 3

### Produktcharakterisierung der Einzelproteine Napin und Cruciferin

### Napin

- Albumin ("2S Protein")
- ca. 20 % des Samenproteins
- 14,5 kDa
- 2 Ketten: 10 und 4,5 kDa
- stark basisches Protein
- viele Isoformen

### Cruciferin

- Globulin ("12S Protein")
- ca. 60% des Samenproteins
- 300 kDa
- aus 6 Untereinheiten aufgebaut, 3 bis 4 sind mit Coomassie anfärbbar im Bereich 20 - 30 kDa
- neutral
- viele Isoformen

### Isoelektrische Punkte:

- Lysoyzm: 11,0
- BSA: 4,6
- Napin: >10
- Cruciferin: ca. 7,25
- Ovalbumin: 4,5

### (A) reines Napin

Proteingehalt 98%; Reinheit (= Napingehalt) >98% (Rest <2% Cruciferin); hohe Denaturierungsstabilität (viel höher als bei Ovalbumin); Löslichkeit bei pH 7,0 (nach Morr, 1985): sehr gut (ca. 100%, vergleichbar mit Ovalbumin); Schaumkapazität (nach Kroll, 1984): 250% (Ovalbumin 170%), also höher als bei Ovalbumin; Schaumstabilität nach 30 min (nach Kroll, 1984): 35% (Ovalbumin 39%), also vergleichbar mit Ovalbumin.

Tests nach Poole (1984) zur Schaumstabilisierung (in Gegenwart von 1% BSA ((also saurem Protein), Öl und Zucker):

### Schaumstabilität:

0,3% Napin: 18%
0,3% Napin + 1% BSA + 5% Öl + 10% Sucrose: 74%
zum Vergleich:
   0,3% Lysozym + 1% BSA + 5% Öl + 10% Sucrose: 91%

### Drainage:

0,3% Napin: 98%
0,3% Napin + 1% BSA + 5% Öl + 10% Sucrose: 65%
zum Vergleich:
   0,3% Lysozym + 1% BSA + 5% Öl + 10% Sucrose: 55%

Napin (ein basisches Protein) kann Schäume in Gegenwart von Öl und Zucker stabilisieren, wenn es in Kombination mit einem sauren Protein eingesetzt wird (öltolerantes Schäumungssystem). Ein saures Protein (z.B. Molkeprotein) in Kombination mit Napin könnte somit das teure Hühnerei-Lysozym ersetzen.

### Emulgiereigenschaften:

Phasenstabilität gut, Hitzestabilität sehr gut.

### (B) reines Cruciferin

Proteingehalt >95%; Reinheit (= Cruciferingehalt) >95% (Rest <3% Napin und <2% andere Proteine); mittlere-Denaturierungsstabilität ist geringer als bei Ovalbumin; Löslichkeit bei pH 7,0 (nach Morr, 1985): schlecht (ca. 10%); Schaumkapazität (nach Kroll, 1984): 100% (Ovalbumin 170%), also mäßig; Schaumstabilität nach 30 min (nach Kroll, 1984): 38% (Ovalbumin 39%), also vergleichbar mit Ovalbumin.

### Emulgiereigenschaften:

Phasenstabilität schlecht, Hitzestabilität gut.

### (C) Nach dem erfindungsgemäßen Verfahren hergestelltes Mischprotein

Proteingehalt >99,5%, enthält typischerweise ca. 56-57% Napin und ca. 41-43% Cruciferin; geringe Denaturierungsstabilität, viel niedriger als bei Ovalbumin und auch als bei Cruciferin; Löslichkeit bei pH 7,0 (nach Morr, 1985): gut (ca. 75%); Schaumkapazität (nach Kroll, 1984): 300% (Ovalbumin 170%), also sehr hoch; Schaumstabilität nach 30 min (nach Kroll, 1984): 82% (Ovalbumin 39%), also auch sehr hoch.

### Emulgiereigenschaften:

Phasenstabilität schlecht, Hitzestabilität schlecht.

### Verhalten bei unterschiedlichen pH-Werten:

das erhaltene Mischprotein wurde bei pH 5,5 eluiert und am Schluss des Reinigungsverfahrens lyophilisiert, bei den pH-Werten 4,0, 7,0 und 10,0 aufgelöst; die Proteinlösung und der nicht aufgelöste Rückstand wurden mittels SDS-Gelchromatographie getestet

**Tabelle 1**

| | **Napingehalt** | **Cruciferin-gehalt** | **Andere Proteine** |
|---|---|---|---|
| Gereinigtes Mischprotein | 56% | 41% | 3% |
| Lösung bei pH 4,0 | 49% | 46% | 5% |
| Lösung bei pH 7,0 | 53% | 43% | 4% |
| Lösung bei pH 10,0 | 50% | 47% | 3% |
| Rückstand bei pH 4,0 | 20% | 73% | 7% |
| Rückstand bei pH 7,0 | 16% | 76% | 8% |
| Rückstand bei pH 10,0 | 49% | 46% | 5% |

Napin als basisches Protein geht bei pH 4,0 und 7,0 erwartungsgemäß sehr gut in Lösung (fast nichts im Rückstand), aber bei pH 10,0 deutlich schlechter, während Cruciferin offensichtlich und erwartungsgemäß aus dem Lyophilisat generell schlechter in Lösung geht, bei pH 4,0 und 7,0 den größten Teil des Rückstands darstellt. Das Mischprotein ist überraschend in einer breiten pH-Spanne und nicht nur bei pH 5,5 wieder lösbar und hat im wesentlichen die gleiche Zusammensetzung. Die o.g. geringere Denaturierungsstabilität deutet auf eine Interaktion/Assoziation von Napin und Cruciferin im Mischprotein hin, so dass ein von den Einzelkomponenten abweichendes Eigenschaftsprofil resultiert.

### Zusammenfassung der Eigenschaften der Proteine

**Tabelle 2**

| | **Napin** | **Cruciferin** | **Mischprotein** |
|---|---|---|---|
| Löslichkeit | +++ | --- | + |
| Schaumkapazität | ++ | + | +++ |
| Schaumkapazität mit Sonnenblumenöl | -- | + | ++ |
| Schaumstabilität | - | - | ++ |
| Schaumstabilität mit Sonnenblumenöl | - | +++ | ++ |
| Emulgiereigenschaften | +++ | --- | --- |
| Schaumkapazität nach Poole | +++ | | |
| Schaumstabilität nach Poole | +++ | | |

Graphisch sind die vorstehend beschriebenen Produktcharakteristika in den Fig. 5 bis 10 dargestellt.

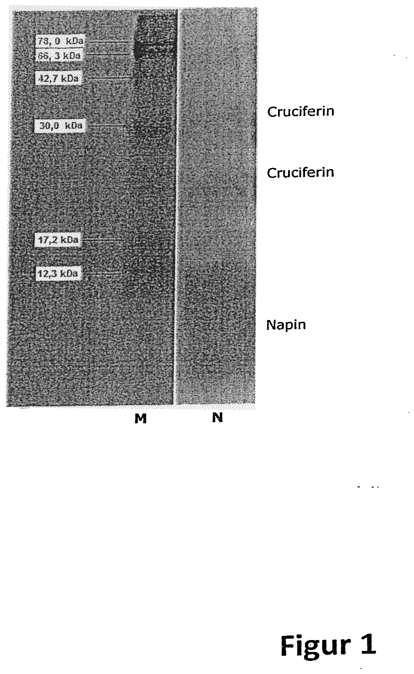

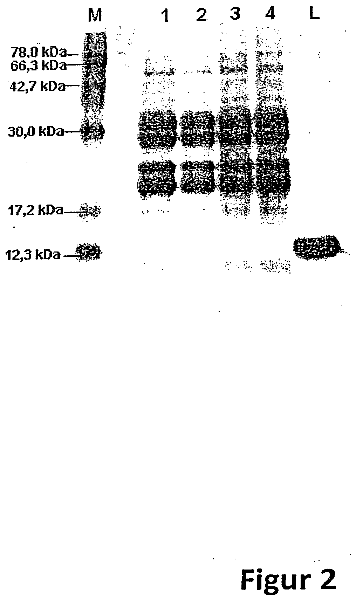

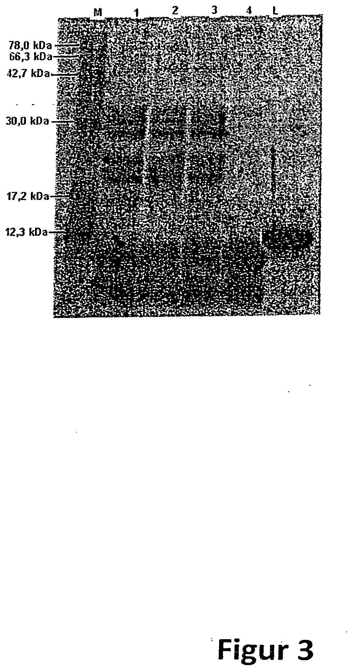

Für die SDS-PAGE Analysen, deren Ergebnisse in Fig. 1-4 dargestellt sind, wurden dem Fachmann bekannte Standardverfahren eingesetzt.

## Patentansprüche

1. Verfahren zur Gewinnung eines Gemischs der Raps-Proteine Napin und Cruciferin aus einer Pflanze, wobei das Verfahren folgende Schritte umfasst:
(a) Aufschluss der Pflanze zur Gewinnung eines Rohextrakts mittels wässriger Extraktion mit einem Extraktionsmittel;
(b) Gewinnung der gewünschten Proteine aus dem Überstand von Schritt (a) und Einstellung des Überstands auf einen pH-Wert im Bereich von 5,0 bis 6,0;
(c) Auftrennung des Gemischs aus Schritt (b) über einen Kationen-Austauscher unter Verwendung eines Hochsalz-Elutionspuffers, wobei der pH-Wert des Puffers im Bereich von 5,0 bis 6,0 liegt; und
(d) Gewinnung des Eluats.

2. Verfahren zur Gewinnung der Raps-Proteine Napin und Cruciferin in reiner Form aus einer Pflanze, wobei das Verfahren folgende Schritte umfasst:
(a) Aufschluss der Pflanze zur Gewinnung eines Rohextrakts mittels wässriger Extraktion mit einem Extraktionsmittel;
(b) Gewinnung der gewünschten Proteine aus dem Überstand von Schritt (a) und Einstellung des Überstands auf einen pH-Wert im Bereich von 3,5 bis 4,5;
(c) Zentrifugation und Gewinnung des Cruciferin enthaltenden Pellets;
(d) Einstellung des Überstands von Schritt (c) auf einen pH-Wert im Bereich von 7,0 bis 8,0;
(e) Auftrennung des Gemischs aus Schritt (d) über einen Kationen-Austauscher unter Verwendung eines Hochsalz-Elutionspuffers mit einem pH-Wert im Bereich von 7,0 bis 8,0; und
(f) Gewinnung des Napin enthaltenden Eluats.

3. Verfahren nach Anspruch 1, wobei der pH-Wert bei den Schritten (b) und (c) im Bereich von 5,5 bis 6,0 liegt.

4. Verfahren nach Anspruch 2, wobei der pH-Wert bei Schritt (b) im Bereich von 3,8 bis 4,2 und bei den Schritten (d) und (e) im Bereich von 7,2 bis 7,8 liegt.

5. Verfahren nach einem der Ansprüche 1 bis 4, wobei das Extraktionsmittel Phosphatpuffer, TRIS-Puffer, Mops-Puffer, HEPPS-Puffer, Barbital-Acetat-Puffer, Essigsäure-Acetat-Puffer, PBS-Puffer, MES-Puffer oder ein Wasser/Ethanol-Gemisch ist.

6. Verfahren nach einem der Ansprüche 1 bis 5, wobei der Hochsalz-Elutionspuffer ein Phosphatpuffer ist.

7. Verfahren nach Anspruch 6, wobei die Molarität des Phosphatpuffers im Bereich von 5 mM bis 80 mM liegt.

8. Verfahren nach Anspruch 6 oder 7, wobei der Hochsalz-Elutionspuffer zusätzlich NaCl mit einer Molarität im Bereich von 0,2 bis 0,6 M enthält.

9. Verfahren nach einem der Ansprüche 1 bis 8, wobei das gewünschte Raps-Protein aus Rapssamen gewonnen wird.

10. Verfahren nach einem der Ansprüche 1 bis 9, wobei die Auftrennung über einen Kationen-Austauscher mittels "Expanded-Bed-Adsorptions"-Verfahren (EBA) erfolgt.

11. Verfahren nach einem der Ansprüche 1 bis 10, wobei die Auftrennung über einen Kationen-Austauscher mittels Kationenaustausch-Chromatographie mit Streamline SP XL™ oder Amberlite-Adsorber, Antibodix-Adsorber, Proteomix-Adsorber, DEAE-Sepharose, SP-Sepharose, Whatman-Kationenadsorber oder ZirChrom-PEZ-Adsorber erfolgt.

12. Raps-Mischprotein mit einer Zusammensetzung von ca. 55-60% Napin und ca. 40-45% Cruciferin, hergestellt nach einem der Ansprüche 1, 3 und 5 bis 11.

## Claims

1. A method for obtaining a mixture of the rapeseed proteins napin and cruciferin from a plant, the method comprising the steps of:
(a) disintegrating the plant for obtaining a crude extract by means of aqueous extraction using an extracting agent;
(b) obtaining the desired proteins from the supernatant from step (a) and adjusting the supernatant to a pH in the range of 5.0 to 6.0;
(c) separating the mixture from step (b) via a cation exchanger using a high salt elution buffer, the pH of the buffer being in the range of 5.0 to 6.0; and
(d) obtaining the eluate.

2. The method for obtaining the rapeseed proteins napin and cruciferin in pure form from a plant, the method comprising the steps of:
(a) disintegrating the plant for obtaining a crude extract by means of aqueous extraction using an extracting agent;
(b) obtaining the desired proteins from the supernatant from step (a) and adjusting the supernatant to a pH in the range of 3.5 to 4.5;
(c) centrifugating and obtaining the pellet that contains cruciferin;
(d) adjusting the supernatant from step (c) to a pH value in the range of 7.0 to 8.0;
(e) separating the mixture from step (d) via a cation exchanger using a high salt elution buffer having a pH in the range of 7.0 to 8.0; and
(f) obtaining the eluate that contains napin.

3. The method according to claim 1, wherein in steps (b) and (c) the pH is in the range of 5.5 to 6.0.

4. The method according to claim 2, wherein in step (b) the pH is in the range of 3.8 to 4.2 and in steps (d) and (e) it is in the range of 7.2 to 7.8.

5. The method according to any of claims 1 to 4, wherein the extracting agent is phosphate buffer, TRIS buffer, MOPS buffer, HEPPS buffer, barbital acetate buffer, acetic acid acetate buffer, PBS buffer, MES buffer or a water/ethanol mixture.

6. The method according to any of claims 1 to 5, wherein the high salt elution buffer is a phosphate buffer.

7. The method according to claim 6, wherein the molarity of the phosphate buffer is in the range of 5 mM to 80 mM.

8. The method according to claim 6 or 7, wherein the high salt elution buffer additionally contains NaCl having a molarity in the range of 0.2 to 0.6 M.

9. The method according to any of claims 1 to 8, wherein the desired rapeseed protein is obtained from rape seeds.

10. The method according to any of claims 1 to 9, wherein the separation is carried out by an expanded bed adsorption (EBA) process via a cation exchanger.

11. The method according to any of claims 1 to 10, wherein the separation is carried out by cation exchange chromatography with a Streamline SP XL™ or Amberlite adsorber, Antibodix adsorber, Proteomix adsorber, DEAE sepharose, SP sepharose, Whatman cation adsorber or ZirChrom-PEZ adsorber using a cation exchanger.

12. A mixed rapeseed protein having a composition of about 55-60% napin and about 40-45% cruciferin, prepared according to any of claims 1, 3 and 5 to 11.

## Revendications

1. Procédé permettant de récupérer un mélange de protéines de colza napine et cruciférine à partir d'une plante, le procédé comprenant les étapes suivantes consistant à:
(a) dissocier la plante pour obtenir un extrait brut par extraction aqueuse à l'aide d'un agent d'extraction;
(b) récupérer les protéines souhaitées du surnageant de l'étape (a) et régler le surnageant à un pH de l'ordre de 5,0 à 6,0;
(c) séparer le mélange de l'étape (b) par l'intermédiaire d'un échangeur de cations à l'aide d'un tampon d'élution à haute teneur en sel, où le pH du tampon est de l'ordre de 5,0 à 6,0; et
(d) récupérer l'éluat.

2. Procédé permettant de récupérer des protéines de colza napine et cruciférine à l'état pur à partir d'une plante, le procédé comprenant les étapes suivantes consistant à:
(a) dissocier la plante pour obtenir un extrait brut par extraction aqueuse à l'aide d'un agent d'extraction;
(b) récupérer les protéines souhaitées du surnageant de l'étape (a) et régler le surnageant à un pH de l'ordre de 3,5 à 4,5;
(c) centrifuger et récupérer la granule contenant de la cruciférine;
(d) régler le surnageant de l'étape (c) à un pH de l'ordre de 7,0 à 8,0;
(e) séparer le mélange de l'étape (d) par l'intermédiaire d'un échangeur de cations à l'aide d'un tampon d'élution à haute teneur en sel à pH de l'ordre de 7,0 à 8,0; et
(f) récupérer l'éluat contenant de la napine.

3. Procédé selon la revendication 1, dans lequel le pH aux étapes (b) et (c) est de l'ordre de 5,5 à 6,0.

4. Procédé selon la revendication 2, dans lequel le pH à l'étape (b) est de l'ordre de 3,8 à 4,2 et aux étapes (d) et (e) est de l'ordre de 7,2 à 7,8.

5. Procédé selon l'une des revendications 1 à 4, dans lequel l'agent d'extraction est un tampon de phosphate, un tampon de TRIS, un tampon de mops, un tampon de HEPPS, un tampon d'acétate de barbital, un tampon d'acétate d'acide acétique, un tampon de PBS, un tampon de MES ou un mélange d'eau et d'éthanol.

6. Procédé selon l'une des revendications 1 à 5, dans lequel le tampon d'élution à haute teneur en sel est un tampon de phosphate.

7. Procédé selon la revendication 6, dans lequel la molarité du tampon de phosphate est de l'ordre de 5 mM à 80 mM.

8. Procédé selon la revendication 6 ou 7, dans lequel le tampon d'élution à haute teneur en sel contient en outre du NaCl avec une molarité de l'ordre de 0,2 à 0,6 M.

9. Procédé selon l'une des revendications 1 à 8, dans lequel la protéine de colza souhaitée est récupérée de graines de colza.

10. Procédé selon l'une des revendications 1 à 9, dans lequel la séparation a lieu par l'intermédiaire d'un échangeur de cations au moyen du procédé "d'adsorption sur couche expansée" (EBA).

11. Procédé selon l'une des revendications 1 à 10, dans lequel la séparation a lieu par l'intermédiaire d'un échangeur de cations au moyen d'une chromatographie d'échange de cations par un adsorbeur Streamline SP XL™ ou Amberlite, un adsorbeur Antibodix, un adsorbeur Proteomix, DEAE-Sepharose, SP-Sepharose, un adsorbeur Whatman ou un adsorbeur ZirChrom-PEZ.

12. Protéine mélangée de colza avec une composition d'environ 55 à 60% de napine et d'environ 40 à 45% de cruciférine, préparée selon l'une des revendications 1, 3 et 5 à 11.
